# EUROPEAN PATENT APPLICATION

(11) **EP 3 674 357 A1**
(43) Date of publication of application: **01.07.2020**
(21) Application number: 18848570.0
(22) Date of filing: 27.08.2018
(51) Int. Cl.: C08L 7/00, B60C 1/00, C08K 3/36, C08K 5/10, C08K 5/521, C08L 9/06, C08L 101/12

(54) **RUBBER COMPOSITION AND TIRE**

(30) Priority: 25.08.2017 JP 2017162739
(71) Applicant: Bridgestone Corporation, Tokyo 104-8340 (JP)
(72) Inventor: TAHARA Seiichi, Tokyo 104-8340 (JP)
(74) Representative: Oxley, Robin John George
(86) International application number: PCT/JP2018/031615
(87) International publication number: WO 2019/039614

(57) **Abstract**

An object of the present disclosure is to provide: a rubber composition having excellent low hysteresis loss properties and snow-gripping capability without lowering the wet-gripping capability; and a tire using the rubber composition. To achieve the object, a rubber composition of the present disclosure has: a rubber component including therein 50 mass % or more of a natural rubber, and a modified styrene-butadiene rubber which contains 1 mass % to 20 mass % of styrene; a resin having a glass transition temperature (Tg) higher than 0 °C; and a low-temperature plasticizer having a glass transition temperature (Tg) lower than -50 °C.

## Description

### TECHNICAL FIELD

The present invention relates to a rubber composition and a tire.

### BACKGROUND ART

There has been growing demand for low fuel consumption in automobiles in recent years, linked to the worldwide movement of strict control on carbon dioxide emission triggered by growing public interest in environmental problems. In order to meet the demand, there has been pursued reducing rolling resistance in tire performances. Although optimizing tire structures has conventionally been studied in this regard as a technique of reducing rolling resistance of a tire, use of a rubber composition having small tanδ and being excellent in low heat generation properties (which properties will occasionally be referred to as "low hysteresis loss properties" hereinafter), as a rubber composition to be applied to a tire, is becoming increasingly common nowadays as the technique of reducing rolling resistance.

Examples of a method for obtaining such a rubber composition being excellent in low hysteresis loss properties as described above include reducing contents of fillers such as carbon black and silica, using carbon black having a large average particle diameter, and the like. However, there is a problem in these methods in that they may cause deterioration in reinforcing properties, wear resistance and wet-gripping capability of a rubber composition

PTL 1 discloses in this regard a technique of blending rubbers having different glass transition temperatures (Tg) in a rubber composition, thereby obtaining satisfactory wet-gripping capability and satisfactorily low rolling resistance in a compatible manner without sacrificing wear resistance of a tire (refer to PTL 1).

### CITATION LIST

### Patent Literature

PTL 1: JP 08-027313 Laid-Open

### SUMMARY

However, the technique disclosed in PTL 1 has room for further improvement in gripping capability on an icy/snowy road (which performance will be referred to as "snow-gripping capability" hereinafter), as well as in low hysteresis loss properties, when it is applied to a tire. Further, the technique of PTL 1 using rubber having relatively low Tg as a rubber component has relatively low tanδ accordingly and thus may not be able to reliably ensure satisfactory wet-gripping capability.

In view of this, an object of the present disclosure is to provide a rubber composition having excellent low hysteresis loss properties and snow-gripping capability without lowering the wet-gripping capability. Further, another object of the present disclosure is to provide a tire capable of exhibiting excellent low hysteresis loss properties and snow-gripping capability without lowering the wet-gripping capability.

The inventors of the present disclosure carried out a keen study in order to solve the above problems. As a result of the study, they discovered that it is possible to maintain satisfactory low hysteresis loss properties and satisfactory wet-gripping capability by using a diene-based rubber and a modified styrene-butadiene rubber containing 1 mass % to 20 mass % of styrene as a rubber component of the rubber composition and blending a resin having a glass transition temperature (Tg) higher than 0 °C with the rubber component, and significantly improve snow-gripping capability by further adding a plasticizer having a glass transition temperature (Tg) lower than -50 °C (which plasticizer will be referred to as a "low-temperature plasticizer" hereinafter) to the rubber composition and controlling the total content of the resin and the low-temperature plasticizer, thereby completing the present disclosure.

Specifically, a rubber composition of the present disclosure is characterized in that it comprises: a rubber component including therein 50 mass % or more of a natural rubber, and a modified styrene-butadiene rubber which contains 1 mass % to 20 mass % of styrene; a resin having a glass transition temperature (Tg) higher than 0 °C; and a low-temperature plasticizer having a glass transition temperature (Tg) lower than -50 °C, wherein the total content of the low-temperature plasticizer and the resin is in the range of ≥ 5 parts by mass and < 50 parts by mass with respect to 100 parts by mass of the rubber component.
In the present disclosure, it is possible to improve low hysteresis loss properties and snow-gripping capability of a rubber composition, without deteriorating wet-gripping capability thereof, by providing the rubber composition with the aforementioned compositional characteristics.

In the rubber composition of the present disclosure, the resin is preferably at least one selected from the group consisting of C₅ based resin, C₅-C₉ based resin, C₉ based resin, terpene based resin, terpene-aromatic compound based resin, dicyclopentadiene resin, and alkylphenol based resin. The wet-gripping capability and the snow-gripping capability can be further improved in this case.

Further, in the rubber composition of the present disclosure, a content of the resin is preferably in the range of ≥ 3 parts by mass and < 50 parts by mass with respect to 100 parts by mass of the rubber component. The wet-gripping capability and the snow-gripping capability can be further improved, without deteriorating the low hysteresis loss properties, in this case.

Yet further, in the rubber composition of the present disclosure, the low-temperature plasticizer is preferably at least one selected from the group consisting of oleic acid ester, trioctyl phosphate, adipic acid ester, trimellitic acid ester, and pyromellitic acid ester. The snow-gripping capability can be further improved in this case.

Yet further, in the rubber composition of the present disclosure, a content of the low-temperature plasticizer is preferably in the range of 1 to 30 parts by mass with respect to 100 parts by mass of the rubber component. The snow-gripping capability can be further improved, without deteriorating the low hysteresis loss properties, in this case.

Yet further, in the rubber composition of the present disclosure, it is preferable that the rubber composition further contains silica. Wear resistance of the rubber composition can be further improved in this case.

Yet further, in the rubber composition of the present disclosure, it is further preferable that the modified styrene-butadiene rubber is obtained by using N,N-bis(trimethylsilyl)-3-[diethoxy(methyl)silyl]propylamine as a modifying agent. The wet-gripping capability, the low hysteresis loss properties and the wear resistance can be further improved in this case.

Yet further, in the rubber composition of the present disclosure, a content of the modified styrene-butadiene rubber in the rubber component is preferably in the range of 1 mass % to 40 mass %. It is possible to achieve the wet-gripping capability, the low hysteresis loss properties, the wear resistance, and the snow-gripping capability at satisfactory levels, respectively, in a compatible manner in this case.

A tire of the present disclosure is characterized in that it uses the aforementioned rubber composition.

The tire of the present disclosure, provided with the compositional characteristics described above, can realize excellent low hysteresis loss properties and snow-gripping capability without deteriorating wet-gripping capability thereof.

According to the present disclosure, it is possible to provide a rubber composition having excellent low hysteresis loss properties and snow-gripping capability without lowering the wet-gripping capability. Further, according to the present disclosure, it is possible to provide a tire capable of exhibiting excellent low hysteresis loss properties and snow-gripping capability without lowering the wet-gripping capability.

### DETAILED DESCRIPTION

Hereinafter, an embodiment of the present disclosure will be demonstratively described in detail.

### < Rubber composition >

A rubber composition of the present disclosure contains: a rubber component including therein 50 mass % or more of a diene-based rubber and a modified styrene-butadiene rubber which contains 1 mass % to 20 mass % of styrene; a resin having a glass transition temperature (Tg) higher than 0 °C; and a low-temperature plasticizer having a glass transition temperature (Tg) lower than -50 °C.

### (Rubber component)

The rubber component, contained in the rubber composition of the present disclosure, includes therein 50 mass % or more of a natural rubber and a modified styrene-butadiene rubber which contains 1 mass % to 20 mass % of styrene.

The natural rubber described above has a relatively low glass transition temperature (Tg) and thus successfully realizes excellent low hysteresis loss properties. Further, inclusion of 50 mass % or more of the natural rubber results in good compatibility of the rubber component with the resin having a glass transition temperature (Tg) higher than 0 °C, thereby facilitating a good effect obtained by blending the resin with the rubber component.

Further, it is possible to enhance dispersibility of fillers and thus improve low hysteresis loss properties, wear resistance, and wet-gripping capability by including the modified styrene-butadiene rubber (which will occasionally be referred to as a "modified SBR" hereinafter) in the rubber component. In the present disclosure, a content of styrene in the modified SBR is set to be within the range of 1 mass % to 20 mass % because the content of styrene of < 1 mass % fails to improve the low hysteresis loss properties, the wear resistance and the wet-gripping capability and the content of styrene of > 20 mass % deteriorates the low hysteresis loss properties. From a similar point of view, the content of styrene in the modified SBR is preferably in the range of 3 mass % to 17 mass % and more preferably in the range of 5 mass % to 15 mass %.

A quantity of bound styrene in the modified SBR can be measured by analyzing UV absorption of the phenyl group. A quantity of bound conjugated diene can be determined, as well, on this basis. Specifically, a quantity of bound styrene is measured as follows, by: diluting 100 mg of a modified SBR as a sample to 100 mL with chloroform in a measuring vessel; dissolving the sample, to obtain a measurement sample; measuring an amount of UV absorption at the ultraviolet wavelength absorbed by the phenyl group of styrene (in the vicinity of 254 nm); and determining a quantity of bound styrene (mass %) with respect to 100 mass % of the measurement sample, based on the amount of UV absorption thus measured (by using a spectrophotometer "UV-2450" manufactured by Shimadzu Corporation).

The rubber component may include, in addition to the natural rubber and the modified SBR, at least one synthetic diene-based rubber, e.g. polyisoprene rubber (IR), polybutadiene rubber (BR). These diene-based rubbers may be either unmodified or modified.

A content of a natural rubber in the rubber component is to be ≥ 50 mass % and is preferably ≥ 70 mass % and more preferably ≥ 80 mass % in terms of further improving the low hysteresis loss properties.

A content of the modified SBR in the rubber component is preferably in the range of 1 mass % to 40 mass % and more preferably in the range of 10 mass % to 40 mass %. The content of the modified SBR of ≥ 1 mass % successfully enhances dispersibility of fillers and the content of the modified SBR of ≤ 40 mass % prevents the workability of the rubber composition from deteriorating.

Type of a modifying agent for use in modification to obtain the modified SBR is not particularly restricted. At least one selected from the group consisting of an alkoxysilane compound, a hydrocarbyloxysilane compound, and a combination thereof, for example, is preferable as the modifying agent in terms of successfully providing SBR with a modified functional group strongly interacting with fillers such as silica.

Type of the alkoxysilane compound is not particularly restricted. Preferable examples of the alkoxysilane compound include an alkoxysilane compound represented by general formula (I) shown below.

R¹ₐ-Si-(OR²)₄₋ₐ ··· (I)

In general formula (I), each of R¹ and R² independently represents a monovalent C₁₋₂₀ aliphatic hydrocarbon group or a monovalent C₆₋₁₈ aromatic hydrocarbon group; "a" represents an integer in the range of 0 to 2; when a plurality of OR² exists, the OR²s may be of either the same type or different types; and the molecule includes no active proton.

Specific examples of the alkoxysilane compound represented by general formula (I) include N-(1,3-dimethylbutylidene)-3-triethoxysilyl-1-propaneamine, tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethyldimethoxysilane, methylphenyldimethoxysilane, dimethyldiethoxysilane, vinyltrimethoxysilane, vinyltriethoxysilane, divinyldiethoxysilane, and the like. N-(1,3-dimethylbutylidene)-3-triethoxysilyl-1-propaneamine, tetraethoxysilane, methyltriethoxysilane, and dimethyldiethoxysilane are preferable among the aforementioned examples. These examples of the alkoxysilane compound may be used by either a single type or two or more types in combination.

The hydrocarbyloxysilane compound is preferably a hydrocarbyloxysilane compound represented by general formula (II) shown below. 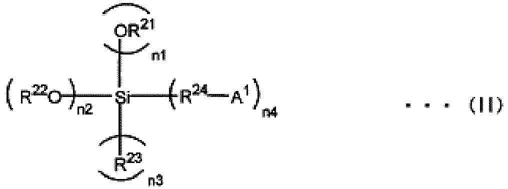 In general formula (II), n1 + n2 + n3 + n4 = 4 (n2 is an integer in the range of 1 to 4 and n1, n3 and n4 are integers in the range of 0 to 3, respectively); A¹ represents at least one functional group selected from the group consisting of a residue of a saturated cyclic tertiary amine compound, a residue of an unsaturated cyclic tertiary amine compound, a residue of ketimine, nitrile group, (thio)isocyanate group, (thio)epoxy group, isocyanuric acid(trihydrocarbyl) ester group, carbonic acid(dihydrocarbyl) ester group, nitrile group, pyridine group, (thio)ketone group, (thio)aldehyde group, amide group, (thio)carboxylic acid ester group, a metal salt of (thio)carboxylic acid ester, a residue of carboxylic anhydride, a residue of carboxylic acid halide, a primary/secondary amino group having a hydrolysable group, and a mercapto group having a hydrolysable group; when n4 is ≥ 2, A¹s may be either of the same type or different types; A¹ may be a divalent group bonded to Si, to form a cyclic structure therewith; R²¹ represents a monovalent C₁₋₂₀ aliphatic/alicyclic hydrocarbon group or a monovalent C₆₋₁₈ aromatic hydrocarbon group; when n1 is ≥ 2, R²¹s may be of either the same type or different types; R²³ represents a monovalent C₁₋₂₀ aliphatic/alicyclic hydrocarbon group or a monovalent C₆₋₁₈ aromatic hydrocarbon group or a halogen atom; when n3 is ≥ 2, R²³s may be of either the same type or different types; R²² represents a monovalent C₁₋₂₀ aliphatic/alicyclic hydrocarbon group or a monovalent C₆₋₁₈ aromatic hydrocarbon group, wherein any of these groups may have a nitrogen atom and/or a silicon atom; when n2 is ≥ 2, R²²s may be of the same type, different types, or form a ring together; R²⁴ represents a divalent C₁₋₂₀ aliphatic/alicyclic hydrocarbon group or a divalent C₆₋₁₈ aromatic hydrocarbon group; and when n4 is ≥ 2, R²⁴s may be of the same type or different types.

Preferable examples of the hydrolysable group, of the primary/secondary amino group having a hydrolysable group or the mercapto group having a hydrolysable group, include trimethylsilyl group and tert-butyldimethylsilyl group. Trimethylsilyl group is particularly preferable in this regard.

The hydrocarbyloxysilane compound represented by general formula (II) is preferably a hydrocarbyloxysilane compound represented by general formula (III) shown below. 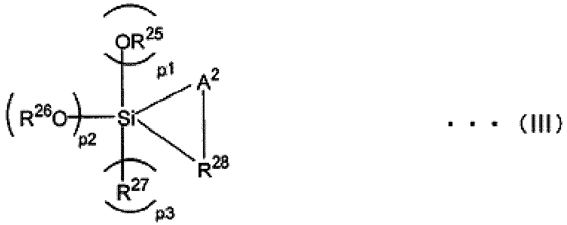 In general formula (III), p1 + p2 + p3 = 2 (p2 is an integer of 1 or 2 and p1 and p3 are integers of 0 or 1, respectively); A² represents NRa (Ra represents a monovalent hydrocarbon group, a hydrolysable group or a nitrogen-containing organic group) or sulfur; R²⁵ represents a monovalent C₁₋₂₀ aliphatic/alicyclic hydrocarbon group or a monovalent C₆₋₁₈ aromatic hydrocarbon group; R²⁷ represents a monovalent C₁₋₂₀ aliphatic/alicyclic hydrocarbon group or a monovalent C₆₋₁₈ aromatic hydrocarbon group or a halogen atom; R²⁶ represents a monovalent C₁₋₂₀ aliphatic/alicyclic hydrocarbon group or a monovalent C₆₋₁₈ aromatic hydrocarbon group or a nitrogen-containing organic group, wherein any of these groups may have a nitrogen atom and/or a silicon atom; when p2 is ≥ 2, R²⁶s may be of either the same type or different types, or form a ring together; and R²⁸ represents a divalent C₁₋₂₀ aliphatic/alicyclic hydrocarbon group or a divalent C₆₋₁₈ aromatic hydrocarbon group. Preferable examples of the hydrolysable group include trimethylsilyl group and tert-butyldimethylsilyl group. Trimethylsilyl group is particularly preferable in this regard.

The hydrocarbyloxysilane compound represented by general formula (II) is preferably a hydrocarbyloxysilane compound represented by general formula (IV) or general formula (V) shown below. 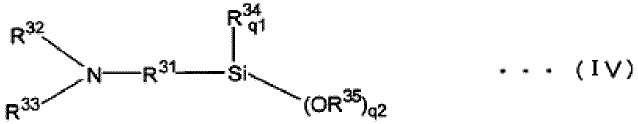 In general formula (IV), q1 + q2 = 3 (q1 is an integer in the range of 0 to 2 and q2 is an integer in the range of 1 to 3, respectively); R³¹ represents a divalent C₁₋₂₀ aliphatic/alicyclic hydrocarbon group or a divalent C₆₋₁₈ aromatic hydrocarbon group; each of R³² and R³³ independently represents a hydrolysable group or a monovalent C₁₋₂₀ aliphatic/alicyclic hydrocarbon group or a monovalent C₆₋₁₈ aromatic hydrocarbon group; R³⁴ represents a monovalent C₁₋₂₀ aliphatic/alicyclic hydrocarbon group or a monovalent C₆₋₁₈ aromatic hydrocarbon group; when q1 = 2, R³⁴s may be of either the same type or different types; and R³⁵ represents a monovalent C₁₋₂₀ aliphatic/alicyclic hydrocarbon group or a monovalent C₆₋₁₈ aromatic hydrocarbon group; when q2 ≥ 2, R³⁵s may be of either the same type or different types. 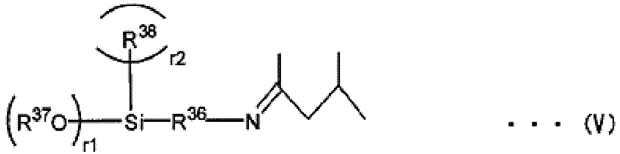 In general formula (V), r1 + r2 = 3 (r1 is an integer in the range of 1 to 3 and r2 is an integer in the range of 0 to 2, respectively); R³⁶ represents a divalent C₁₋₂₀ aliphatic/alicyclic hydrocarbon group or a divalent C₆₋₁₈ aromatic hydrocarbon group; R³⁷ represents dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, a monovalent C₁₋₂₀ aliphatic/alicyclic hydrocarbon group or a monovalent C₆₋₁₈ aromatic hydrocarbon group; when r1 ≥ 2, R³⁷s may be of either the same type or different types; R³⁸ represents a C₁₋₂₀ hydrocarbyloxy group, a monovalent C₁₋₂₀ aliphatic/alicyclic hydrocarbon group or a monovalent C₆₋₁₈ aromatic hydrocarbon group; and when r2 = 2, R³⁸s may be of either the same type or different types.

The hydrocarbyloxysilane compound represented by general formula (II) is preferably a hydrocarbyloxysilane compound having two or more nitrogen atoms, represented by general formula (VI) or general formula (VII) shown below. The low hysteresis loss properties and the wear resistance can be achieved in a compatible manner at more satisfactory levels than otherwise in this case. 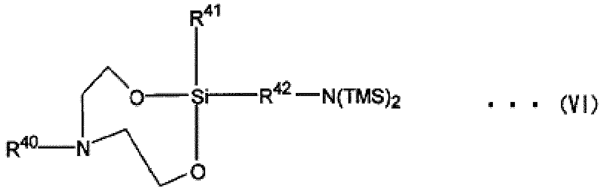 In general formula (VI), R⁴⁰ represents trimethylsilyl group, a monovalent C₁₋₂₀ aliphatic/alicyclic hydrocarbon group, or a monovalent C₆₋₁₈ aromatic hydrocarbon group; R⁴¹ represents a C₁₋₂₀ hydrocarbyloxy group, a monovalent C₁₋₂₀ aliphatic/alicyclic hydrocarbon group, or a monovalent C₆₋₁₈ aromatic hydrocarbon group; and R⁴² represents a divalent C₁₋₂₀ aliphatic/alicyclic hydrocarbon group or a divalent C₆₋₁₈ aromatic hydrocarbon group. 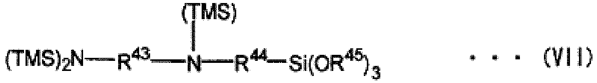 In general formula (VII), each of R⁴³ and R⁴⁴ independently represents a divalent C₁₋₂₀ aliphatic/alicyclic hydrocarbon group or a divalent C₆₋₁₈ aromatic hydrocarbon group; R⁴⁵ represents a monovalent C₁₋₂₀ aliphatic/alicyclic hydrocarbon group or a monovalent C₆₋₁₈ aromatic hydrocarbon group; and R⁴⁵s may be of either the same type or different types.

The hydrocarbyloxysilane compound represented by general formula (II) is preferably a hydrocarbyloxysilane compound represented by general formula (VIII) shown below. 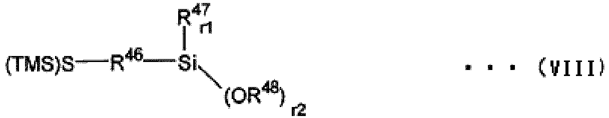 In general formula (VIII), r1 + r2 = 3 (r1 is an integer in the range of 0 to 2 and r2 is an integer in the range of 1 to 3, respectively); R⁴⁶ represents a divalent C₁₋₂₀ aliphatic/alicyclic hydrocarbon group or a divalent C₆₋₁₈ aromatic hydrocarbon group; each of R⁴⁷ and R⁴⁸ independently represents a monovalent C₁₋₂₀ aliphatic/alicyclic hydrocarbon group or a monovalent C₆₋₁₈ aromatic hydrocarbon group; and R⁴⁷s/R⁴⁸s may be of either the same type or different types.

The hydrocarbyloxysilane compound represented by general formula (II) is preferably a hydrocarbyloxysilane compound represented by general formula (IX) shown below. 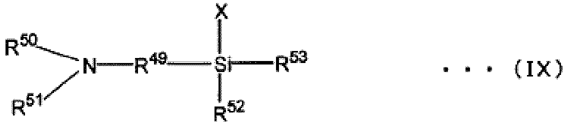 In general formula (IX), "X" represents a halogen atom; R⁴⁹ represents a divalent C₁₋₂₀ aliphatic/alicyclic hydrocarbon group or a divalent C₆₋₁₈ aromatic hydrocarbon group; R⁵⁰ and R⁵¹ either each independently represent a hydrolysable group, a monovalent C₁₋₂₀ aliphatic/alicyclic hydrocarbon group or a monovalent C₆₋₁₈ aromatic hydrocarbon group, or are bonded to each other to form a divalent organic group; and each of R⁵² and R⁵³ independently represents a halogen atom, a hydrocarbyloxy group, a monovalent C₁₋₂₀ aliphatic/alicyclic hydrocarbon group or a monovalent C₆₋₁₈ aromatic hydrocarbon group. A hydrolysable group is preferable for each of R⁵⁰ and R⁵¹. Preferable examples of the hydrolysable group include trimethylsilyl group and tert-butyldimethylsilyl group. Trimethylsilyl group is particularly preferable in this regard.

The hydrocarbyloxysilane compound represented by general formula (II) is preferably a hydrocarbyloxysilane compound represented by any of general formula (X) to general formula (XIII) shown below. 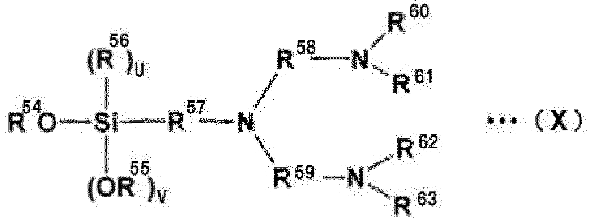 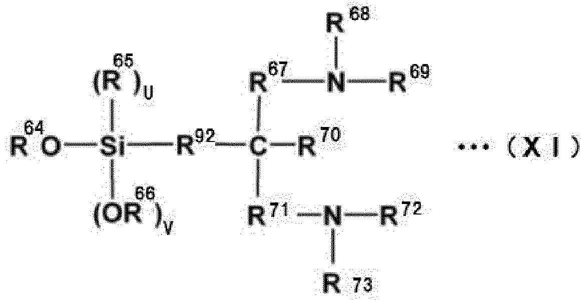 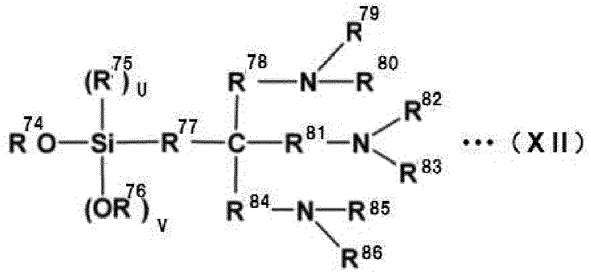 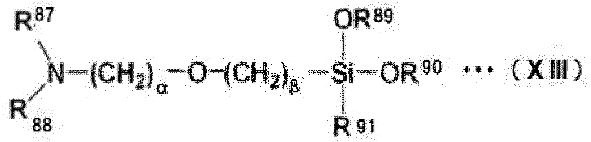 In general formulae (X) to (XIII), each of "U" and "V" represents an integer in the range of 0 to 2, wherein U + V = 2; R⁵⁴ to R⁹²⁽⁹¹⁾ of general formulae (X) to (XIII) may be of either the same type or different types; each of R⁵⁴ to R⁹²⁽⁹¹⁾ represents a divalent C₁₋₂₀ aliphatic/alicyclic hydrocarbon group or a divalent C₆₋₁₈ aromatic hydrocarbon group; and each of α and β of general formula (XIII) represents an integer in the range of 0 to 5.

Preferable examples of the compounds represented by general formulae (X) to (XII) include N1,N1,N7-tetramethyl-4-((trimethoxysilyl)methyl)-1,7 heptane, 2-((hexyl-dimethoxysilyl)methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, and 4-(3-(dimethylamino)propyl)-N1,N1N7,N7-tetramethyl-4-((trimethoxysilyl)methyl)heptane-1,7-diamine.

Preferable examples of the compound represented by general formula (XIII) include N,N-dimethyl-2-(3-(dimethoxymethylsilyl)propoxy)ethaneamine, N,N-bis(trimethylsilyl)-2-(3-(trimethoxysilyl)propoxy)ethaneamine, N,N-dimethyl-2-(3-(trimethoxysilyl)propoxy)ethaneamine, and N,N-dimethyl-3-(3-(trimethoxysilyl)propoxy)propane-1-amine.

The hydrocarbyloxysilane compounds represented by general formulae (II) to (XIII) are preferably alkoxysilane compounds.

Preferable examples of a modifying agent for use in obtaining the modified SBR by anion polymerization include at least one compound selected from the group consisting of 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, and 1-methyl-2-pyrrolidone.
The modifying agent is preferably an amide portion of a lithium amide compound used as a polymerization initiator in anion polymerization. Examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, lithium methylphenethylamide, and combinations thereof. For example, a modifying agent as an amide portion of lithium hexamethyleneimide is hexamethyleneimine. A modifying agent as an amide portion of lithium pyrrolidide is pyrrolidine. A modifying agent as an amide portion of lithium piperidide is piperidine.

A modification rate of the modified SBR is not particularly restricted and may be selected according to an application. For example, the modification rate is preferably ≥ 30 %, more preferably ≥ 35 %, and particularly preferably ≥ 70 %. It is possible to cause fillers including silica to be selectively present in the phases of the rubber component so that the low hysteresis loss properties and the wear resistance can be achieved in a compatible manner at more satisfactory levels than otherwise, by setting the modification rate to be within the aforementioned ranges.

### (Resin having glass transition temperature (Tg) higher than 0 °C)

The rubber composition of the present disclosure contains, in addition to the rubber components described above, a resin having a glass transition temperature (Tg) higher than 0 °C. The rubber composition, containing a resin having a relatively high Tg (which resin will occasionally be referred to as a "high Tg resin" hereinafter), has a relatively high Tg and thus relatively high tanδ at 0 °C by itself, thereby successfully exhibiting improved wet gripping capability when it is used for a tire.

Type of the high Tg resin is not particularly restricted as long as a Tg thereof is higher than 0 °C. Preferable examples for use, of the high Tg resin, include at least one selected from the group consisting of C₅ based resin, C₅-C₉ based resin, C₉ based resin, terpene based resin, terpene-aromatic compound based resin, dicyclopentadiene resin, and alkylphenol based resin.
It is preferable to use at least one of C₅ based resin, C₅-C₉ based resin, and C₉ based resin in terms of further improving the wet-gripping capability.

The C₅ based resin described above represents a C₅ based synthetic petroleum resin and examples thereof include a solid polymer obtained by polymerizing C₅ fractions by using a Friedel-Crafts type catalyst such as AlCl₃, BF₃ or the like. More specifically, the examples of C₅ based resin include a copolymer having isoprene, cyclopentadiene, 1,3-pentadiene, 1-pentene or the like as a main component, a copolymer of 2-pentene and dicyclopentadiene, a polymer mainly constituted of 1.3-pendadiene, and the like.
It is possible to improve the braking performance on an icy/snowy road surface, as well, by using a C₅ based resin as the high Tg resin.

The C₅-C₉ based resin represents a C₅-C₉ based synthetic petroleum resin and examples thereof include a solid polymer obtained by polymerizing C₅-C₁₁ fractions by using a Friedel-Crafts type catalyst such as AlCl₃, BF₃ or the like. Examples of the C₅-C₉ based resin include a copolymer having styrene, vinyltoluene, α-methylstyrene, indene or the like as a main component. A resin having a relatively small C≥₉ content is preferable as the C₅-C₉ based resin in terms of compatibility with the rubber component in the present disclosure. "A resin having a relatively small C≥9 content" means that a content of a resin having nine or more carbon atoms is less than 50 mass %, preferably less than 40 mass %, with respect to the total content of the resins in the present disclosure.
It is possible to improve handling properties of a resulting product, as well, by using the C₅-C₉ based resin as the high Tg resin.
The C₅-C₁₁ fractions for use in polymerization to obtain a solid polymer as the C₅-C₉ based resin may include fractions other than a C₅ fraction and a C₉ fraction.

The C₉ based resin represents a C₉ based synthetic petroleum resin and examples thereof include a solid polymer obtained by polymerizing C₉ fractions by using a Friedel-Crafts type catalyst such as AlCl₃, BF₃ or the like. Examples of the C₉ based resin include a copolymer having, as a main component, indene, α-methylstyrene, vinyltoluene, or the like.
It is possible to improve handling properties of a resulting product, as well, by using the C₉ based resin as the high Tg resin.

The terpene based resin is a solid resin manufactured by: preparing turpentine oil simultaneously obtained when rosin is produced from pinus trees, or a polymer component separated from turpentine oil; and polymerizing turpentine oil/the polymer component by using a Friedel-Crafts type catalyst. Examples of the terpene based resin include β-pinene resin, α-pinene resin, and the like.
Representative examples of the terpene-aromatic compound based resin include terpene-phenol resin. Terpene-phenol resin can be obtained by reacting terpenes with phenols of various types by using a Friedel-Crafts type catalyst and optionally subjecting a resulting product to condensation by using formalin. Although types of the terpenes as raw materials are not particularly restricted, the terpene is preferably monoterpene hydrocarbon such as α-pinene and limonene, more preferably that containing α-pinene, and particularly preferably α-pinene. In the present disclosure, a terpene-phenol resin having a relatively small content of a phenol component is preferable. "A terpene-phenol resin having a relatively small content of a phenol component" means that a content of phenol is less than 50 mass %, preferably less than 40 mass %, with respect to the total content of the resins in the present disclosure.
It is possible to improve handling properties of a resulting rubber product, as well, by using the terpene-aromatic compound based resin (terpene-phenol resin in particular) as the high Tg resin.

The dicyclopentadiene resin is a resin obtained by polymerizing dicyclopentadiene by using a Friedel-Crafts type catalyst such as AlCl₃, BF₃ or the like. Specific examples of commercially available dicyclopentadiene resin include "Quintone 1920" manufactured by Zeon Corporation, "Quintone 1105" manufactured by Zeon Corporation, "MARUKAREZ M-890A" manufactured by Maruzen Petrochemical Co., Ltd. and the like.
It is possible to improve braking performance on an icy/snowy road surface of a resulting product, as well, by using the dicyclopentadiene resin as the high Tg resin.

Examples of the alkylphenol based resin include an alkylphenol-acetylene resin such as p-tert-butylphenol-acetylene resin, an alkylphenol-formaldehyde resin having a low polymerization degree, and the like.
It is possible to improve handling properties of a resulting product, as well, by using the alkylphenol based resin as the high Tg resin.

A content of the high Tg resin is not particularly restricted. The content, however, is preferably ≥ 3 parts by mass and < 50 parts by mass, more preferably 5 to 40 parts by mass, further more preferably 10 to 30 parts by mass, and particularly preferably 15 to 25 parts by mass, with respect to 100 parts by mass of the rubber component in terms of obtaining satisfactory wet-gripping capability and snow-gripping capability without deteriorating the low hysteresis loss properties.
When a content of the high Tg is less than 5 parts by mass with respect to 100 parts by mass of the rubber component, the content is too small, whereby satisfactory wet-gripping capability and snow-gripping capability may not be obtained. When a content of the high Tg exceeds 50 parts by mass with respect to 100 parts by mass of the rubber component, the content is too large, whereby the low hysteresis loss properties and wear resistance of a resulting rubber composition may deteriorate.

### (Low-temperature plasticizer having glass transition temperature (Tg) lower than -50 °C)

The rubber composition of the present disclosure contains, in addition to the rubber components and the resin having a glass transition temperature (Tg) higher than 0 °C described above, a low-temperature plasticizer having a glass transition temperature (Tg) lower than -50 °C, preferably lower than -60 °C. It is possible to enhance tanδ of the rubber composition to an adequate range even in a low temperature environment and thus improve snow-gripping capability of the rubber composition, while preventing a glass transition temperature of the rubber composition from increasing, by adding a plasticizer having a glass transition temperature (Tg) lower than -50 °C (which plasticizer will be referred to as a "low-temperature plasticizer" hereinafter) to the rubber composition.

In the present disclosure, type of the low-temperature plasticizer is not particularly restricted as long as the plasticizer has a glass transition temperature (Tg) lower than -50 °C.
Examples of the low-temperature plasticizer include a carboxylic acid ester plasticizer, a phosphoric acid ester plasticizer, a sulfonic acid ester plasticizer, and the like.

Examples of the carboxylic acid ester plasticizer include phthalic acid ester, isophthalic acid ester, tetrahydrophthalic acid ester, adipic acid ester, maleic acid ester, fumaric acid ester, trimellitic acid ester, pyromellitic acid ester, linoleic acid ester, oleic acid ester, stearic acid ester, ricinoleic acid ester, and the like.
Examples of the phosphoric acid ester include trimethyl phosphate, triethyl phosphate, tributyl phosphate, trioctyl phosphate, tri-(2-ethylhexyl) phosphate, 2-ethylhexyldiphenyl phosphate, tributoxyethyl phosphate, and the like.

The low-temperature plasticizer is preferably at least one selected from the group consisting of oleic acid ester, trioctyl phosphate, adipic acid ester, trimellitic acid ester, and pyromellitic acid ester because the snow-gripping capability can then be further improved.

A content of the low-temperature plasticizer is not particularly restricted. The content, however, is preferably 1 to 30 parts by mass, more preferably 1 to 20 parts by mass, and further more preferably 1 to 10 parts by mass, with respect to 100 parts by mass of the rubber component in terms of further improving snow-gripping capability without deteriorating the low hysteresis loss properties.
When a content of the low-temperature plasticizer is less than 1 parts by mass with respect to 100 parts by mass of the rubber component, the content is too small, whereby satisfactory snow-gripping capability may not be obtained. When a content of the low-temperature plasticizer exceeds 30 parts by mass with respect to 100 parts by mass of the rubber component, the content is too large, whereby wear resistance of a resulting rubber composition may deteriorate.

In the rubber composition of the present disclosure, the total content of the low-temperature plasticizer and the resin having a glass transition temperature (Tg) higher than 0 °C is to be in the range of ≥ 5 parts by mass and < 50 parts by mass, preferably in the range of 10 to 40 parts by mass, and more preferably in the range of 12 to 23 parts by mass, with respect to 100 parts by mass of the rubber component. It is possible to achieve the wet-gripping capability, the low hysteresis loss properties, the wear resistance, and the snow-gripping capability at satisfactory levels in a compatible manner by adjusting the total contents of the low-temperature plasticizer and the resin in the rubber composition. When the total content of the low-temperature plasticizer and the resin having a glass transition temperature (Tg) higher than 0 °C is less than 5 parts by mass with respect to 100 parts by mass of the rubber component, satisfactory wet-gripping capability and snow-gripping capability may not be reliably obtained. When the total content of the low-temperature plasticizer and the resin is equal to or larger than 50 parts by mass with respect to 100 parts by mass of the rubber component, the low hysteresis loss properties and wear resistance of a resulting rubber composition may deteriorate.

### (Fillers)

The rubber composition of the present disclosure preferably contains, in addition to the rubber components, the resin having a glass transition temperature (Tg) higher than 0 °C and the low-temperature plasticizer having a glass transition temperature (Tg) lower than -50 °C described above, a filler material.
It is possible to improve the low hysteresis loss properties and reinforcing properties of the rubber composition, without deteriorating other relevant physical properties thereof, by adding a filler material to the rubber composition.

A content of the filler material is preferably 20 to 120 parts by mass, more preferably 40 to 100 parts by mass, and further more preferably 50 to 90 parts by mass, with respect to 100 parts by mass of the rubber component. When a content of the filler material is less than 20 parts by mass with respect to 100 parts by mass of the rubber component, a good effect by the filler material may not be obtained in a satisfactory manner. When a content of the filler material exceeds 120 parts by mass with respect to 100 parts by mass of the rubber component, workability of a resulting rubber composition may deteriorate.

Type of the filler material is not particularly restricted and examples of the filler material include carbon black, silica, and other inorganic filler materials. The filler material preferably includes silica because it is then possible to further enhance strength and improve the low hysteresis loss properties of the rubber component without sacrificing softness thereof when the filler material is well dispersed, together with the high Tg resin, into the rubber component.

Examples of silica include wet silica (hydrated silica), dry silica (anhydrous silica), calcium silicate, aluminum silicate, and the like. Wet silica is preferably used among these examples. A BET specific surface area of the wet silica is preferably in the range of 40 to 350 m²/g, more preferably in the range of 150 to 300 m²/g, and further more preferably in the range of 200 to 250 m²/g. Silica having a BET specific surface area within the aforementioned ranges is advantageous because it can achieve both satisfactory rubber reinforcing properties and satisfactory dispersion into the rubber component in a compatible manner. Silica having a BET specific surface area in the range of 80 to 300 m²/g is particularly preferable, in this regard. Commercially available products such as "Nipsil AQ" or "Nipsil KQ" manufactured by Tosoh silica Corporation, "ULTRASIL VN3" manufactured by Evonik Industries AG, or the like can be used as the aforementioned silica. These examples of the silica may be used by either a single type or two or more types in combination.

A content of the silica in the filler material is preferably in the range of 50 mass % to 100 mass % and more preferably in the range of 80 mass % to 100 mass %. Setting a content of silica in the filler material to be in the range of 50 mass % to 100 mass % is advantageous because it is then possible to effectively reduce rolling resistance and improve braking performance on a wet road surface of a resulting product, while well avoiding deterioration of softness of the rubber component.

The filler material may include, in addition silica, carbon black, aluminum oxide, clay, alumina, talc, mica, kaolin, glass balloons, glass beads, calcium carbonate, magnesium carbonate, magnesium hydroxide, calcium carbonate, magnesium oxide, titanium oxide, potassium titanate, barium sulfate, and the like therein in an appropriate manner.

### (Other components)

The rubber composition of the present disclosure may appropriately contain, in addition to the rubber components, the resin having a glass transition temperature (Tg) higher than 0 °C, the low-temperature plasticizer having a glass transition temperature (Tg) lower than -50 °C and the filler material described above, a compounding agent generally used in the rubber industries, for example, additives generally used in the rubber industries such as antioxidant, crosslinking accelerator, crosslinking agent, crosslinking accelerator auxiliary, silane coupling agent, various types of workability improvers, softening agent, stearic acid, agent for preventing deterioration by ozone, surfactant, and the like.

Type of the aforementioned antioxidant is not particularly restricted and the conventionally known antioxidants can be used. Specific examples of the antioxidant include phenol-based antioxidant, imidazole-based antioxidant, amine-based antioxidant, and the like. These examples of the antioxidant may be used by either a single type or two or more types in combination.

Type of the aforementioned crosslinking accelerator is not particularly restricted and the conventionally known crosslinking accelerator can be used. Specific examples of the crosslinking accelerator include: thiazole-based vulcanization accelerator such as 2-mercaptobenzothiazole, dibenzothiazyl disulfide; sulfenamide-based vulcanization accelerator such as N-cyclohexyl-2-benzothiazyl sulfenamide, N-t-butyl-2-benzothiazyl sulfenamide; guanidine-based vulcanization accelerator such as diphenylguanidine; thiuram-based vulcanization accelerator such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, dipentamethylenethiuram tetrasulfide; dithiocarbamate salt-based vulcanization accelerator such as zinc dimethyldithiocarbamate; zinc dialkyldithiophosphate; and the like.

Type of the aforementioned crosslinking agent is not particularly restricted and examples thereof include sulfur, a bismaleimide compound, and the like.
Specific examples of the bismaleimide compound include N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, bis(3-ethyl-5-methyl-4-maleimidephenyl)methane, and the like. N,N'-m-phenylenebismaleimide, N,N'-(4,4'-diphenylmethane)bismaleimide, and the like are preferable for use in the present disclosure.

Examples of the aforementioned crosslinking accelerator auxiliary include zinc white (ZnO), fatty acid, and the like. The fatty acid may be any of saturated, unsaturated, normal, and branched fatty acids. The number of carbon atoms of the fatty acid, which is not particularly restricted, either, may be in the range of 1 to 30, preferably in the range of 15 to 30. Specific examples of the fatty acid include: naphthenic acid such as cyclohexanoic acid (cyclohexanecarboxylic acid), alkylcyclopentane having a side chain; saturated fatty acid such as hexanoic acid, octanoic acid, decanoic aid (including a branched carboxylic acid such as neodecanoic acid), dodecanoic acid, tetradecanoic acid, hexadecanoic acid, octadecanoic acid (stearic acid); unsaturated fatty acid such as methacrylic acid, oleic acid, linoleic acid, linolenic acid; resin acid such as rosin, tall-oil acid, abietic acid; and the like. These examples of the crosslinking accelerator auxiliary may be used by either a single type or two or more types in combination. Zinc white and stearic acid can be preferably used in the present disclosure.

Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, (3-mercaptopropyl)trimethoxysilane, (3-mercaptopropyl)triethoxysilane, (2-mercaptoethyl)trimethoxysilane, (2-mercaptoethyl)triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, (3-mercaptopropyl)dimethoxymethylsilane, dimethoxymethylsilylpropyl-N,N-dimethylthiocarbamoyl tetrasulfide, dimethoxymethylsilylpropylbenzothiazolyl tetrasulfide, (3-octanolythiopropyl)triethoxysilane, (3-mercaptopropyl)trimethoxysilane, (3-mercaptopropyl)triethoxysilane, vinyltriethoxysilane, vinyltrimethoxysilane, (3-aminopropyl)triethoxysilane, (3-aminopropyl)trimethoxysilane, (3-mercaptopropyl)methyldimethoxysilane, (y-glycidoxypropyl)trimethoxysilane, (γ-glycidoxypropyl)methyldiethoxysilane, 3-[ethoxybis(3,6,9,12,15-pentaoxaoctacosane-1-yloxy)silyl]-1-propanethiol (Product name "Si363" manufactured by Evonik Degussa GmbH), and the like. These examples of the silane coupling agent can be used by either a single type or two or more types in combination.

The rubber composition of the present disclosure preferably further contains a softening agent in terms of achieving satisfactory low hysteresis loss properties and wear resistance. Examples of the softening agent include naphthenic base oil, paraffinic base oil, aromatic base oil, and the like. A content of the softening agent to be blended is preferably in the range of 2 to 30 parts by mass with respect to 100 parts by mass of the rubber component. When a content of the softening agent exceeds 30 parts by mass with respect to 100 parts by mass of the rubber component, the softening agent may ooze out to a surface of a resulting rubber product and/or wear resistance of the rubber product may deteriorate.
The naphthenic base oil or the paraffinic base oil are preferable and the naphthenic base oil is the most preferable for use among the aforementioned examples of the softening agent. The aromatic base oil is less preferable than other examples because the aromatic base oil, having a relatively high content of aromatic components, exhibits high affinity with the chemicals which are also aromatic compounds, whereby a reaction between polymer and the base oil itself tends to be disturbed. In contrast, the naphthenic base oil and the paraffinic base oil smoothly disperse into the polymer (an oil having a low pour point disperses more smoothly into polymer than an oil having a high pour point) and are effectively reacted with the polymer.
Base oils are classified into the naphthenic base oil, the paraffinic base oil, and the aromatic base oil described above according to CA, CP, CN values thereof. For example, TDAE, SRAE, RAE, Black Oil, and the like are classified into the naphthenic base oil. Spindle oil, paraffin oil, and the like are classified into the paraffinic base oil.
A preferable effect can be obtained by a mixed oil such as "A/O Mix" (manufactured by SANKYO YUKA KOGYO K.K.) obtained by mixing the naphthenic base oil with naphthenic asphalt.
When the lubricant oil described above is to be blended with other components is not particularly restricted. For example, the lubricant oil may be oil-extended at the stage of manufacturing the rubber component or added in a mixing and kneading process of the rubber composition.

There is no particular restriction on a method for manufacturing the rubber composition of the present disclosure. The rubber composition can be obtained, for example, by blending, mixing and kneading the rubber component, the resin having a glass transition temperature (Tg) higher than 0 °C, the low-temperature plasticizer having a glass transition temperature (Tg) lower than -50 °C, and the filler material described above according to a conventionally known method.

### < Tire >

A tire of the present disclosure is characterized in that it uses the rubber composition described above. The tire of the present disclosure, having the rubber composition of the present disclosure as a tire material, can realize excellent low hysteresis loss properties and snow-gripping capability without lowering the wet-gripping capability thereof.

The rubber composition is preferably applied to a tread of the tire.

There is no particular restriction on the tire of the present disclosure and the tire can be manufactured by the conventional method, except that the rubber composition of the present disclosure needs to used in at least one of tire structural members thereof. Examples of gas with which the tire is to be inflated include inert gas such as nitrogen, argon, helium or the like, as well as ambient air and air of which oxygen partial pressure has been adjusted.

### EXAMPLES

The present disclosure will be described further in detail by (Preparation) Examples hereinafter. The present disclosure is not limited by any means to these (Preparation) Examples.

### (Examples 1 to 12, Comparative Examples 1 to 5)

Each of rubber composition samples was prepared according to one of the basic formulations 1 to 3 shown in Table 1. Amounts of the respective components to be blended with the rubber component are expressed as amounts (parts by mass) with respect to 100 parts by mass of the rubber component in Table 1. Further, type and content ("parts by mass" with respect to 100 parts by mass of the rubber component) of each of the high Tg resin and the low-temperature plasticizer, of each rubber composition sample, are shown in Table 2.

Sample tires (tire size: 195/65R15) of which capabilities were to be evaluated were then prepared by using as tread rubbers the respective rubber composition samples thus prepared. Specifically, each sample tire was assembled with a prescribed rim according to the JATMA standard and inflated at the prescribed internal pressure, so that a tire-rim assembly was obtained, in this regard.

Each of the sample tires using the respective rubber composition samples, of which capabilities were to be evaluated, was evaluated for rolling resistance, wet-gripping capability, and snow-gripping capability thereof according to the methods described below.

### (1) Rolling resistance

Rolling resistance was measured by: assembling each sample tire with a rim having a width corresponding to the bead width of the sample tire, thereby obtaining a tire-rim assembly; rotating the tire-rim assembly at the speed of 80 km/hour on a drum tester; and measuring a rolling resistance value of the sample tire under a load of 4.41 kN. The inverse number of the rolling resistance value thus measured was calculated.

The inverse number of the rolling resistance value thus calculated was then expressed as an index relative to the corresponding inverse number of the sample tire using the rubber composition sample of Com. Example 1 being "100". The results/the predicted results are shown in Table 2. The larger index value represents the smaller rolling resistance, i.e. the better low hysteresis loss properties.

### (2) Wet-gripping capability (braking performance on a wet road surface made of iron plates)

Wet-gripping capability was measured by: mounting each tire-rim assembly sample (× 4) of which capabilities were to be evaluated, on a passenger vehicle of 2000 cc displacement; running the passenger vehicle on a wet road surface made of iron plates, of a test course, for evaluation; stepping on a brake at the speed of 40 km/hour and causing a locking phenomenon of the tires; and measuring a distance travelled by the vehicle from the stepping on the brake to the stoppage of the vehicle.

The inverse number of the distance thus measured was calculated, which was then expressed as an index relative to the corresponding inverse number of the sample tire using the rubber composition sample of Com. Example 1 being "100". The results/the predicted results are shown in Table 2. The larger index value represents the better performance on a wet road surface made of iron plates, i.e. the better wet-gripping capability.

### (3) Snow-gripping capability (braking performance on ice)

Braking performance on ice was determined by: mounting each tire-rim assembly sample (× 4) of which capabilities were to be tested, on a passenger vehicle of 1600 cc displacement produced in Japan; and running the passenger vehicle on an icy road surface (the temperature of ice: -1 °C) and measuring a braking distance travelled by the vehicle from the stepping on the brake to the stoppage of the vehicle in a manner similar to the measurement of the wet-gripping capability.

Snow-gripping capability of each tire-rim assembly sample or each Example was then expressed by an index based on the braking distance thereof thus measured, relative to the corresponding braking distance of Comp. Example 1, according to the following formula.

Snow-gripping capability = (the braking distance of Comp. Example 1/the braking distance of the Example) × 100

The results/the predicted results are shown in Table 2. The larger index value represents the better performance on an icy road surface or the better snow-gripping capability.

**[Table 1]**

| Formulation | Formulation 1 | Formulation 2 | Formulation 3 |
|---|---|---|---|
| SBR | 80 | - | - |
| BR | 20 | - | - |
| Modified SBR 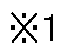 | - | 30 | 60 |
| NR | - | 70 | 40 |
| Carbon black 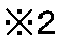 | 10 | 10 | 10 |
| Silica 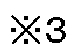 | 60 | 60 | 60 |
| Silane coupling agent 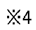 | 6 | 6 | 6 |
| Stearic acid | 1 | 1 | 1 |
| Wax 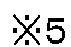 | 2 | 2 | 2 |
| Antioxidant A 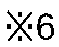 | 4 | 4 | 4 |
| Antioxidant B 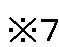 | 0.3 | 0.3 | 0.3 |
| Zinc white | 2.5 | 2.5 | 2.5 |
| Vulcanization accelerator A 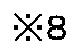 | 0.8 | 0.8 | 0.8 |
| Vulcanization accelerator B 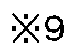 | 0.8 | 0.8 | 0.8 |
| Vulcanization accelerator C 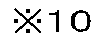 | 0.9 | 0.9 | 0.9 |
| Sulfur | 1.5 | 1.5 | 1.5 |

| | | | |
|---|---|---|---|
| *1 Modified styrene-butadiene copolymer rubber manufactured under the following conditions (Tg: -60 °C) A modified SBR was obtained by: charging a cyclohexane solution of 1,3-butadiene and a cyclohexane solution of styrene into a dry, nitrogen-substituted pressure-resistant glass vessel having inner volume: 800 mL, such that 67.5 g of 1,3-butadiene and 7.5 g of styrene were present therein; adding 0.6 mmol of 2,2-ditetrahydrofurylpropane and 0.8 mmol of n-butyllithium to the mixture and carrying out polymerization at 50 °C for 1.5 hours; adding, when the polymerization conversion ratio in the polymerization reaction system reaches/reached substantially 100 %, 0.72 mmol of N,N-bis(trimethylsilyl)-3-[diethoxy(methyl)silyl]propylamine as a modifying agent to the system and carrying out a modification reaction at 50 °C for 30 minutes; then adding 2 mL of an isopropanol solution of 2,6-di-t-butyl-p-cresol (BHT) (BHT concentration: 5 mass %) to the polymer solution to stop the reaction; and drying a resulting substance by the conventional method, thereby obtaining a modified SBR. *2 "Seast 7HM" manufactured by Tokai Carbon Co., Ltd. *3 "Nipsil VN3" manufactured by Toso Silica Corporation *4 Bis(3-ethoxysilylpropyl)tetrasulfide, "Si75®" manufactured by Evonic Industries, AG *5 Microcrystalline wax, "OZOACE 0701" manufactured by Nippon Seiro Co., Ltd. *6 N-(1,3-dimethylbutyl)-N'-phenyl-p-phenylenediamine, "Nocrac 6C" manufactured by Ouchi-Shinko Chemical Industrial Co., Ltd. *7 Polymerized 2,2,4-trimethyl-1,2-dihydroquinoline, "NONFLEX RD" manufactured by Seiko Chemical Co., Ltd. *8 1,3-diphenylguanidine, "Nocceler D" manufactured by Ouchi-Shinko Chemical Industrial Co., Ltd. *9 Di-2-benzothiazolyl disulfide, "Nocceler DM" manufactured by Ouchi-Shinko Chemical Industrial Co., Ltd. *10 N-cyclohexyl-2-benzothiazolesulfenamide, "Sanceler CM-G" manufactured by SANSHIN CHEMICAL INDUSTRY CO., LTD. | | | |

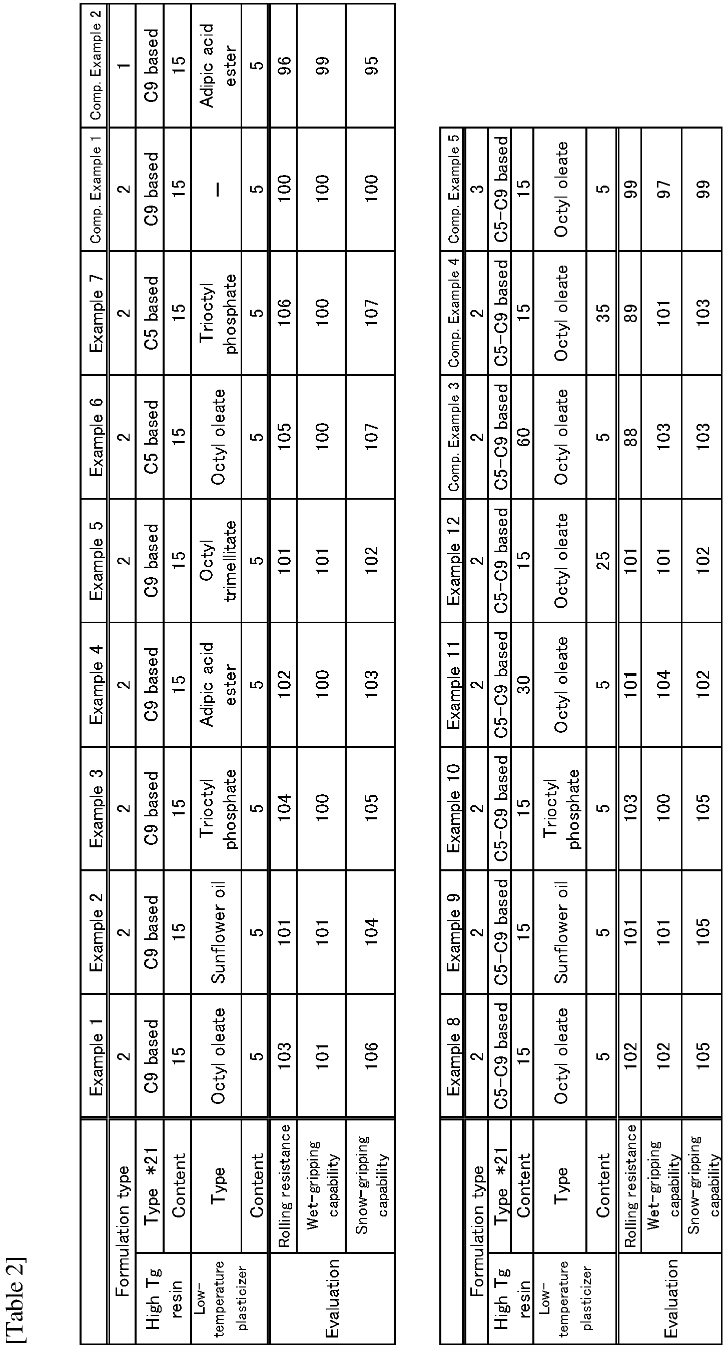

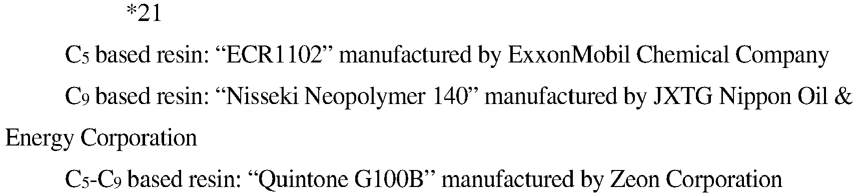

It is anticipated from the results/the predicted results shown in Table 2 that use of the rubber compositions of the respective Examples, for tire treads, results in satisfactory performances in any of rolling resistance, wet-gripping capability and snow-gripping capability, which performances are equal to or excel the corresponding performances achieved by use of the rubber compositions of the respective Comparative Examples.

### INDUSCTRIAL APPLICABILITY

According to the present disclosure, it is possible to provide a rubber composition having excellent low hysteresis loss properties and snow-gripping capability without lowering the wet-gripping capability. Further, according to the present disclosure, it is possible to provide a tire capable of exhibiting excellent low hysteresis loss properties and snow-gripping capability without lowering the wet-gripping capability.

## Claims

1. A rubber composition comprising:
a rubber component including therein 50 mass % or more of a natural rubber, and a modified styrene-butadiene rubber which contains 1 mass % to 20 mass % of styrene;
a resin having a glass transition temperature (Tg) higher than 0 °C; and
a low-temperature plasticizer having a glass transition temperature (Tg) lower than -50 °C,
wherein the total content of the low-temperature plasticizer and the resin is in the range of ≥ 5 parts by mass and < 50 parts by mass with respect to 100 parts by mass of the rubber component.

2. The rubber composition of claim 1, wherein the resin is at least one selected from the group consisting of C₅ based resin, C₅-C₉ based resin, C₉ based resin, terpene based resin, terpene-aromatic compound based resin, dicyclopentadiene resin, and alkylphenol based resin.

3. The rubber composition of claim 1 or 2, wherein a content of the resin is in the range of ≥ 3 parts by mass and < 50 parts by mass with respect to 100 parts by mass of the rubber component.

4. The rubber composition of any of claims 1 to 3, wherein the low-temperature plasticizer is at least one selected from the group consisting of oleic acid ester, trioctyl phosphate, adipic acid ester, trimellitic acid ester, and pyromellitic acid ester.

5. The rubber composition of any of claims 1 to 4, wherein a content of the low-temperature plasticizer is in the range of 1 to 30 parts by mass with respect to 100 parts by mass of the rubber component.

6. The rubber composition of any of claims 1 to 5, further comprising silica.

7. The rubber composition of any of claims 1 to 6, wherein the modified styrene-butadiene rubber is obtained by using N,N-bis(trimethylsilyl)-3-[diethoxy(methyl)silyl]propylamine as a modifying agent.

8. The rubber composition of any of claims 1 to 7, wherein a content of the modified styrene-butadiene rubber in the rubber component is in the range of 1 mass % to 40 mass %.

9. A tire, using the rubber composition of any of claims 1 to 8.
